# EUROPEAN PATENT APPLICATION

(11) **EP 2 819 029 A1**
(43) Date of publication of application: **31.12.2014**
(21) Application number: 13305920.4
(22) Date of filing: 28.06.2013
(51) Int. Cl.: G06F 17/30

(54) **Database interrogation**

(71) Applicant: ALCATEL LUCENT, 92100 Boulogne-Billancourt (FR)
(72) Inventor: Maag, Maria Coralia Laura, 91620 NOZAY (FR); Hacid, Hakim, 91620 NOZAY (FR)
(74) Representative: Novagraaf Technologies

(57) **Abstract**

A database comprises data objects having semantically meaningful content. An interrogation of the database involves a processor, which carries out the following operations. The processor analyzes data objects (203) so as to identify semantically meaningful elements of content in a data object. Moreover, the processor identifies for a semantically meaningful element, a type of descriptive information that the semantically meaningful element provides. The processor defines a filter for the data objects (206). The filter comprises a set of filter categories. A filter category corresponds to a type of descriptive information that has been identified for respective semantically meaningful elements of content occurring in respective data objects. A filter criterion can be defined for a filter category, so as to form a selection of data objects that have a semantically meaningful element of content providing the type of descriptive information corresponding to the filter category and meeting the filter criterion.

## Description

### FIELD OF THE INVENTION

An aspect of the invention relates to a method of interrogating a database comprising data objects having semantically meaningful content. The method may be used, for example, in electronic commerce by facilitating identification of one or more offers of interest among relatively many and diverse offers, which are presented on a website. Other aspects of the invention relate to a device readable medium comprising a set of instructions, and a processor.

### BACKGROUND OF THE INVENTION

A database may be open in the sense that many persons can add data objects to the database. An open database thus typically has a content that is not known beforehand. Moreover, the content can vary dynamically and in an unforeseeable way. In addition, the content of an open database can be voluminous and, moreover, quite heterogeneous. The open database may comprise relatively many and diverse data objects. All this can make it difficult to identify one or more data objects of interest in an open database.

For example, an open database may concern a public advertisement website where individuals may offer a product or a service for sale, or for rent. Offers are continuously being added and removed. The offers presented on the website thus vary dynamically and unforeseeably. Moreover, a public advertisement website may comprise numerous offers relating to a relatively wide variety of products and services. What is more, these products and services can be described in different and even inconsistent ways. It will thus generally be difficult to identify one or more offers of interest on a public advertisement website.

In contrast, a professional seller's website will generally allow easy identification of products and services of interest. Such a website generally provides one or more filters allowing a website visitor to select one or more categories of products and services of interest. For example, let it be assumed that a professional seller's website is specialized in shoe sales. In that case, filters can allow a website visitor to select a brand of interest, a size of interest, a color of interest, as well as one or more other shoe characteristics of interest.

Creating filters on a professional seller's website can be relatively easy. This is because there are relatively few categories of products and services and, moreover, these are known beforehand. What is more, there will be relatively few persons who can add a new product, or a new service, to the website. In general, a new product, or a new service, will be described according to a predefined template with, for example, several predefined fields. Such a field may relate to a particular characteristic of a product or service, whereby this characteristic constitutes a potential search criterion.

A predefined template may also be used for creating filters on a public advertisement website. For example, an individual who wants to offer a product for sale can be requested to specify certain characteristics by means of one or more select type HTML fields. For example, an HTML field may require the individual to specify a particular category to which the product belongs: computers, books, house furniture, cars, bicycles, etc.. Further fields may relate to product characteristics.

However, a template for a public advertisement website will generally only capture some basic characteristics of a product or a service that is offered for sale. The template will generally not capture specific details of the product or service. This is because there will generally be a wide variety of products and services that can be presented, whereby specific details may vary from one product, or service, to another.

Using various templates, each dedicated to a particular set of products or services, can be relatively complex. Moreover, it will be difficult, or even impossible, to provide a template with sufficient detail for any imaginable product or service that may be offered on a public advertisement website.

What is more, templates may pose undesired constraints and limits on product and service descriptions. A template constitutes a restriction of freedom, which can be contrary to a spirit of "openness" of a public advertisement website. It should be noted that the considerations presented hereinbefore equally apply to any type of open database, not just to public advertisement websites.

### SUMMARY OF THE INVENTION

There is a need for a solution that allows facilitating identification of one or more data objects of interest in a database that may comprise relatively many and diverse data objects.

In order to better address this need, in accordance with an aspect of the invention, there is provided a method of interrogating a database comprising data objects having semantically meaningful content, the method comprising:
- an analysis step in which a processor analyzes data objects so as to identify semantically meaningful elements of content in a data object, and to identify, for a semantically meaningful element, a type of descriptive information that the semantically meaningful element provides; and
- a filter definition step in which the processor defines a filter for the data objects, the filter comprising a set of filter categories, whereby a filter category corresponds to a type of descriptive information that has been identified for respective semantically meaningful elements of content occurring in respective data objects, and whereby a filter criterion can be defined for a filter category, so as to form a selection of data objects that have a semantically meaningful element of content providing the type of descriptive information corresponding to the filter category and meeting the filter criterion.

Another aspect of the invention concerns a processor arranged to interrogate a database comprising data objects having semantically meaningful content, the processor comprising:
- an analysis module arranged to analyze the set of data objects so as to identify semantically meaningful elements of content in a data object, and to identify, for a semantically meaningful element, a type of descriptive information that the semantically meaningful element provides; and
- a filter definition module arranged to define a filter for the set of data objects, the filter comprising a set of filter categories, whereby a filter category corresponds to a type of descriptive information that has been identified for respective semantically meaningful elements of content occurring in respective data objects, and whereby a filter criterion can be defined for a filter category, so as to form a selection of data objects that have a semantically meaningful element of content providing the type of descriptive information corresponding to the filter category and meeting the filter criterion.

Yet another aspect of the invention concerns a device readable medium comprising a set of instructions that enables a processor, which is capable of executing the set of instructions, to carry out the method according as defined hereinbefore.

In each of these aspects, a filter is automatically and dynamically defined on the basis of content analysis results. The filter is thus adapted to the content that is present in the database, or in a particular preselected portion of the database. The filter can provide relevant filter criteria that allow making a selection of data objects, which is likely to have a relatively high density of data objects of interest. This facilitates identification of these data objects.

An embodiment of the invention advantageously comprises one or more of the following additional features, which are described in separate paragraphs. These additional features each contribute to facilitating identification of one or more data objects of interest in a database that may comprise relatively many and diverse data objects.

In a tuple generation step, the processor advantageously generates a tuple for a semantically meaningful element of content. The tuple comprises a type-defining element, which defines the type of descriptive information that the semantically meaningful element of content provides. The tuple further comprises a specifying element, which specifies the descriptive information that the semantically meaningful element of content provides. The tuple is associated with the data object in which the semantically meaningful element of content occurs.

The specifying element of the tuple advantageously specifies a value in case the type of descriptive information is quantifiable.

The type-defining element advantageously defines at least one of the following categories of types of descriptive information: size, color, model, style, brand, and age.

In a tuple processing step, the processor advantageously generates an index of tuples that have been generated and associated with data objects. The tuple processing step follows the aforementioned analysis step and precedes the aforementioned filter definition step.

In the filter that is defined, a filter category advantageously relates to a type-defining element that occurs in various tuples that have been generated.

In the case of the preceding paragraph, a filter criterion then advantageously specifies an operation depending on the type of descriptive information that the type-defining element defines.

In the filter definition step, a filter category may be defined that advantageously corresponds with an aggregate of respective type-defining elements of respective tuples if these respective type-defining elements define a similar type of descriptive information.

In the analysis step, the processor may advantageously detect a data pattern that occurs in several data objects, and that constitutes a semantically meaningful element of content. Multiple occurring data patterns may then constitute a type of descriptive information.

Data objects may be in the form of respective messages from respective authors.

More specifically, these respective messages may constitute respective transaction propositions, a transaction proposition describing an item that is subject of a proposed transaction.

The processor may receive a search request comprising a search criterion. The processor may then identify a set of data objects that meet the search criterion. In that case, the aforementioned analysis step and the aforementioned filter definition step are advantageously applied to the set of data objects that have been identified.

For the purpose of illustration, a detailed description of some embodiments of the invention is presented with reference to accompanying drawings.

### BRIEF DESCRIPTION OF THE DRAWINGS

FIG. 1 is a block diagram that illustrates an infrastructure for database interrogation.
FIG. 2 is a flow chart diagram that illustrates a method of interrogating a database.
FIG. 3 is a pictorial diagram that illustrates a webpage comprising a representation of a filter that has been defined in the method of interrogating the database.

### DETAILED DESCRIPTION

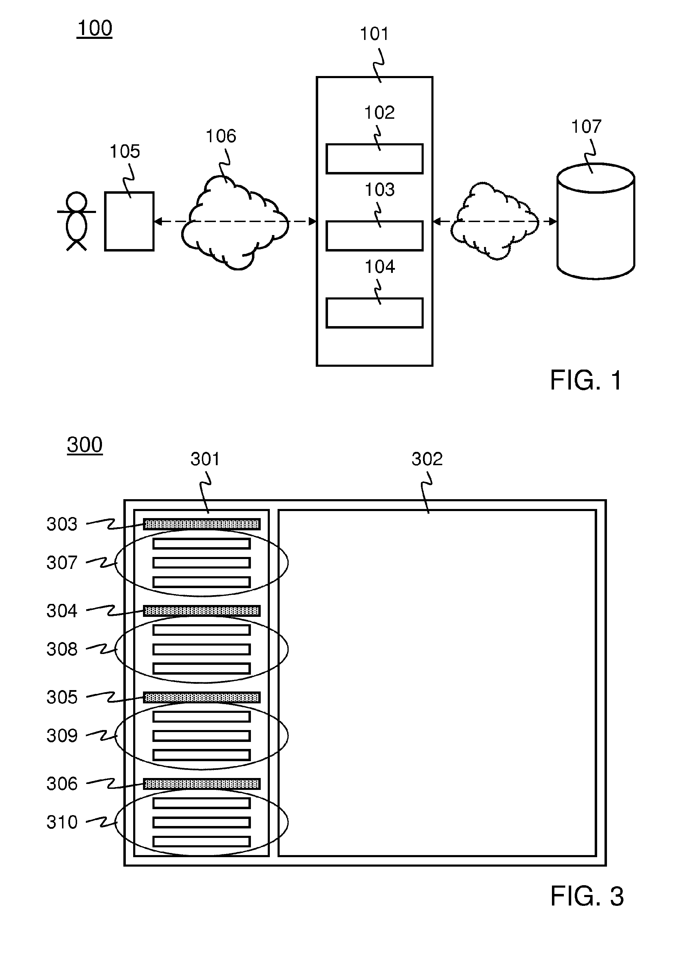

FIG. 1 schematically illustrates an infrastructure 100 for database interrogation. The infrastructure 100 comprises a server 101, which comprises a processor 102, a program memory 103, and a data memory 104. A communication device 105 may access the server 101 via a communication network 106. A database 107 is communicatively coupled to the server 101. This may be via a communication network too. The database 107 comprises data objects having semantically meaningful content.

The server 101 may host, for example, a public advertisement website through which individuals may offer for sale products or services. The database 107 may comprise descriptions of these offers. Such a description constitutes a data object having semantically meaningful content.

A person may access the public advertisement website by means of the communication device 105. To that end, the communication device 105 may be equipped with, for example, a web browser. The person can then interrogate the database 107 so as to identify one or more offers of interest.

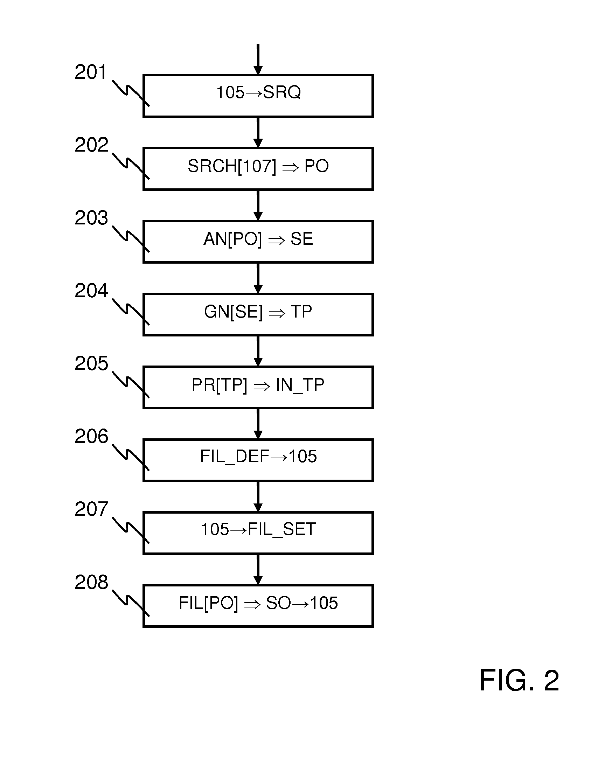

FIG. 2 illustrates a method of interrogating the database 107 illustrated in FIG. 1. The method comprises a series of steps 201-208, which the server 101 carries out while interacting with the communication device 105. FIG. 2 may be regarded as a flowchart representation of a software program, that is, a set of instructions, which can be stored in the program memory 103 of the server 101. This software program enables the server 101 to carry out various operations, by means of its processor 102, which are described hereinafter with reference to FIG. 2.

The method illustrated in FIG. 2 is an example wherein the server 101 hosts a public advertisement website and the database 107 comprises descriptions of offers, which are presented through this website. These descriptions will be referred to as "offers" for reasons of convenience. It is assumed that the communication device 105 has accessed the server 101 and, more specifically, has accessed the public advertisement website hosted on the server 101.

In a search request step 201, the server 101 receives a search request from the communication device 105 (105→SRQ). The search request comprises at least one search criterion that should be applied for making a pre-selection of offers, which are potentially of interest. A search criterion may be in the form of a keyword or a string of keywords. A search criterion may also be in the form of a selected category of products or services. For example, the search request may specify that the database 107 should be searched for offers that relate to automobiles.

In a search step 202, the server 101 interrogates the database 107 so as to identify offers that meet the search criterion, or the search criteria, whichever applies. The server 101 thus provides a preselected set of offers on the basis of the search request (SRCH[107] ⇒ PO). The server 101 may retrieve these preselected offers from the database 107, at least partially, and temporarily store these preselected offers in its data memory 104. Alternatively, the server 101 may store references to the preselected offers in the data memory 104. The server 101 may optionally transmit an indication on the preselected set of offers to the communication device 105 from which the search request originates. This indication can take numerous forms such as, for example, a number corresponding to the amount of offers within the preselected set.

In an analysis step 203, the server 101 semantically analyzes the preselected offers. In analyzing a preselected offer, the server 101 identifies semantically meaningful elements of content in the preselected offer (AN[PO] ⇒ SE). For example, in case the preselected offers concern housing, the server 101 may identify a text string "90 square meters" as a semantically meaningful element of content. As another example, in case the preselected offers concern cars, the server 101 may identify a text string "red metallic" as a semantically meaningful element of content.

Semantically meaningful elements may also be extracted from content other than text. For example, an offer may comprise a photo representing a product that is offered for sale. An image processing module may extract semantically meaningful information from the photo. For example, let it be assumed that the photo represents a table that is offered for sale. The image processing module may detect that the table is round by applying shape detection to the photo. The image processing module may further detect that the table is red by applying color detection. In a similar fashion, semantically meaningful information can be extracted from a video.

Semantically meaningful elements may be identified by recognizing frequently occurring data patterns in the preselected set of offer. For example, a particular text string may occur in a significant number of preselected offers. The text string will then probably constitute a semantically meaningful element. Moreover, the text string allows a distinction between two types of offers: those that comprise the text string concerned and those that do not comprise the text string. For example, the text string "plasma screen" may be a frequently occurring data pattern in a set of preselected offers that concern display devices. A distinction can be made between display devices with plasma screens and display devices that comprise other types of screens, such as, for example, LCD screens or LED screens, LCD being an acronym for Liquid Crystal Display, and LED being an acronym for Light Emitting Diode.

The server 101 preferably adapts a semantic analysis to information that is comprised in the search request. This information can guide the server 101, as it were, in extracting particular semantically meaningful elements of content, which are expected to be present in the preselected offers. The server 101 thus uses a priori knowledge in the search request so that the server 101 knows what to look for in the preselected offers. For example, let it be assumed that the search request specifies that housing offers are looked for. In that case, the semantical analysis can be geared to detecting, for example, a text string "square meters", as well as other text strings that are typically employed in housing offers.

In the analysis step 203, the server 101 further identifies, for a semantically meaningful element, a type of descriptive information that the semantically meaningful element provides. For example, a semantically meaningful element may provide one of the following types of descriptive information: size, color, model, style, brand, and age. In case the preselected offers concern housing, the server 101 may identify that the aforementioned text string "90 square meters" is a semantically meaningful element that provides size information. In case the preselected offers concern cars, the server 101 may identify that the aforementioned text string "red metallic" is a semantically meaningful element that provides color information.

In a tuple generation step 204, the server 101 generates a tuple for a semantically meaningful element of content that has been identified (GN[SE] ⇒ TP). A tuple is a data entity that comprises a type defining element and a specifying element. The type-defining element defines the type of descriptive information that the semantically meaningful element of content provides. The specifying element specifies the descriptive information that the semantically meaningful element of content provides. The server 101 associates the tuple that it has generated with the offer in which the semantically meaningful element of content occurs.

For example, let it be assumed that the server 101 has identified the aforementioned text string "90 square meters" as a semantically meaningful element of content in an offer. The server 101 may then generate a tuple of which the type-defining element defines "surface in square meters", and of which the specifying element specifies "90". The tuple can therefore be expressed as <surface in m², 90>. Alternatively, the type-defining element of the tuple may define "surface", and the specifying element may specify "90 square meters". In that case, the tuple can be expressed as <surface, 90 m²>. In either case, the server 101 associates this tuple with the offer in which this content occurs. In this example, the type of descriptive information "surface in square meters" or just "surface" is a type of descriptive information that is quantifiable. The specifying element therefore specifies a value "90 square meters" or just "90".

As another example, let it be assumed that the server 101 has identified the aforementioned text string "red metallic" as a semantically meaningful element of content in an offer. The server 101 may then generate a tuple of which the type-defining element defines "color", and of which the specifying element specifies "red metallic". The tuple can therefore be expressed as <color, red metallic >. The server 101 associates this tuple with the offer in which this content occurs. In this example, the type of descriptive information "color" is a type of descriptive information that, strictly speaking, is not quantifiable. However, in this example, the specifying element specifies an attribute among a particular set of possible attributes, being different colors, which can be assigned to the type of descriptive information concerned.

It should be noted that a tuple may also be generated for a frequently occurring data pattern that the server 101 has identified. It may be difficult for the server 101 to detect a particular type of descriptive information that the frequently occurring data pattern provides. In that case, the server 101 may use a generic term, such as, for example, "other", as the type-defining element in a tuple that is generated for the frequently occurring data pattern. The tuple can be expressed as <other, aaa>, whereby "aaa" represents the frequently occurring data pattern. The same generic term may be used for other frequently occurring data patterns. Accordingly, various different "other" tuples may be generated, such as, for example, <other, bbb>, and <other, ccc>, whereby "bbb" and "ccc" represent respective frequently occurring data patterns.

In a tuple processing step 205, the server 101 generates an index of tuples, which have been generated and associated with the preselected offers as described hereinbefore (PR[TP] ⇒ IN_TP). Namely, at the end of the analysis step 203, for each preselected offer, or for nearly each preselected offer, there will be a set of tuples that characterize the offer concerned. Through indexing, the tuples that have been generated are organized in view of facilitating a further search among the preselected offers. The server 101 may use conventional indexing techniques for this purpose.

In the tuple processing step 205, the server 101 may further aggregate tuples of which the type-defining elements define a similar type of descriptive information. That is, the server 101 may identify a set of tuples that have somewhat different type-defining elements, but which all define a similar type of descriptive information. For each of these tuples, the server 101 may then replace the type-defining element, with a shared type-defining element, which may be more generic than the type-defining element that is replaced.

For example, let it be assumed that the following two tuples have been generated: <producer, X> and <trademark, Y>, wherein "producer" and "trademark" constitute type-defining elements. An aggregation of these tuples may result in the following two replacing tuples: <brand, X> and <brand, Y>, wherein "brand" constitutes the shared type-defining element, which is more generic. It should be noted that the shared type-defining element may be present in one or more of the tuples that are aggregated. For example, the aforementioned two tuples may form part of a larger set that comprises a tuple <brand, Z>. In this case, the latter tuple will not be replaced in an aggregation process.

In a filter definition step 206, the server 101 defines a filter for the preselected offers (FIL_DEF→105). A filter comprises a set of filter categories, which does not preclude that a filter may comprise a single filter category only. A filter category corresponds to a type of descriptive information that has been identified for respective semantically meaningful elements of content occurring in respective preselected offers. For example, let it be assumed that X has been identified as semantically meaningful element in one or more offers, that Y has been identified as semantically meaningful element in one or more other offers, and that Z has been identified as semantically meaningful element in one or more yet other offers. Let it further be assumed that X, Y, and Z are brand names, which is a type of descriptive information "brand". The server 101 may then define a filter category "brand".

In a filter definition step 206, the server 101 1 preferably uses tuples that have been generated as described hereinbefore, and which have advantageously been indexed and aggregated. In that case, a filter category relates to a type-defining element that occurs in various tuples, which are associated with different offers. For example, let it be assumed that the tuples <brand, X>, <brand, Y>, and <brand, Z> have been generated. In that case, the server 101 may use this result to define "brand" as a filter category. It should be noted that the aforementioned tuples, which have "brand" as the type-defining element, may have been obtained following an aggregation as described hereinbefore. Moreover, an index of tuples that has been generated as described hereinbefore can indicate offers in which a particular tuple occurs.

The filter allows defining a filter criterion for a filter category. Using tuples, the filter criterion preferably specifies an operation that depends on the type of descriptive information, which the type-defining element of the relevant tuples defines. For example, let it be assumed that a filter category corresponds to "brand", as in the example hereinbefore. Following this example, the filter criterion may specify an operation "is" or, differently worded, "is equal to". The following are possible filter criteria: "is X", "is Y", and "is Z". The filter criterion could also specify an operation, such as, "contains", "begins with", or "ends with" in association with a particular text string.

As another example, let it be assumed that the preselected offers concern housing and that a filter category corresponds to "surface", which is a type of descriptive information that is quantifiable. In that case, the following operations may occur in a filter criterion "is smaller than", "is between", and "is larger than". The following are possible filter criteria "smaller than 50 m^{2"}, "between 50 m² and 100 m^{2"}, and "larger than 100 m^{2"}. The server 101 1 thus preferably specifies an operation to be used in a filter criterion, which depends on the type of descriptive information that corresponds with the filter criteria, such as "brand" or "surface", in the aforementioned examples.

The server 101 may use further information obtained in the analysis step 203 to define meaningful filter criteria. For example, let it be assumed that this information is expressed in the form of tuples that have "surface" as the type-defining element. There may be numerous of such tuples, whereby a particular tuple specifies a particular surface mentioned in one or more particular offers. The server 101 then preferably defines a set of surface ranges as filter criteria on the basis of respective surfaces that are specified in respective offers. More specifically, the server 101 preferably defines a surface range so that a reasonable number of offers specify surfaces that fall within the surface range. A reasonable number is approximate to the total number of offers that specify a surface divided by the total number of surface ranges that are used in the filter criteria. This avoids having a surface range for which only very few offers mention surfaces falling in this range, or a surface range for which nearly all offers mention surfaces falling in this range.

At the end of the filter definition step 206, the server 101 integrates a representation of the filter in a webpage. This webpage is presented to the communication device 105 from which the server 101 has received the search request. The webpage then allows a user of the communication device 105 to select a particular filter criterion for a particular filter category. The user may select respective filter criteria for respective filter categories, if the filter comprises several filter categories. The filter thus allows the user to form a selection of data objects that meet the following two conditions. Firstly, a data object in the selection has a semantically meaningful element of content that provides the type of descriptive information corresponding to the filter category. Secondly, the data object meets the filter criterion that has been specified for this filter category.

FIG. 3 schematically illustrates a webpage 300 that comprises a representation of a filter, which the server 101 has defined as described hereinbefore. The webpage 300 comprises a left-hand section 301 in which the representation of the filter is present. A main section 302 may represent some preselected offers to which the filter may be applied. In left-hand section 301, four different filter categories 303-306 are indicated. A filter category may be indicated by means of, for example, a text string such as "color" or "brand". A set of filter criteria 307-310 is presented under each filter category 303-306. A filter criterion may be expressed by means of, for example, a text string, a mathematical operator in association with one or more numbers, or a color, or any other type of visual representation that is appropriate for the filter category of interest.

In a filter setting step 207, the server 101 receives a filter setting from the communication device 105 (105→FIL_SET). The filter setting defines a filter criterion that the user has selected for a filter category. The filter setting may comprise various filter criteria, each filter criterion applying to a different filter category. For example, let it be assumed that the filter comprises a filter category "color" and a filter category "brand". In that case, the filter setting may define that "is red metallic" is the filter criterion applicable to "color", and that "is X" is the filter criterion applicable to "brand".

In a filter application step 208, the server 101 filters the preselected offers according to the filter setting that the user has specified. Accordingly, the server 101 forms a filtered selection of offers (FIL[PO] ⇒ SO→105). In this selection, an offer can occur only if the offer has a semantically meaningful element of content meeting the following two conditions. Firstly, the semantical meaningful element provides the type of descriptive information that corresponds to a filter category for which a filter criterion is defined. Secondly, the semantical meaningful element should meet the filter criterion that applies according to the filter setting. More specifically, an offer is included in the filtered selection only if, for each filter category for which a filter criterion is defined, the offer comprises a semantical meaningful element that meets the aforementioned two conditions.

For example, let it be assumed that the aforementioned filter setting applies: "is red metallic" is the filter criterion that applies to the filter category "color" and "is X" is the filter criterion that applies to the filter category "brand". In that case, the filtered selection will only include offers in which the color red metallic has been identified and in which the brand X has been identified as semantically meaningful elements. As mentioned hereinbefore, this identification may be based on text strings, but may also be based on image analysis, or other forms of analysis.

At the end of the filter application step 208, the server 101 integrates a representation of the filtered selection of offers in a webpage. This webpage is then presented to the communication device 105 from which the server 101 has received the search request and, subsequently, the filter setting. The representation of the filtered selection may be in the form of, for example, a listing. A user of the communication device 105 may then select a particular offer from the filtered selection so as to examine this offer more closely.

In the method described hereinbefore, a filter is thus automatically and dynamically defined on the basis of content analysis results. The filter is thus adapted to content under consideration that has been analyzed. The method described hereinbefore is an example in which this content are offers that have been preselected on the basis of an initially submitted search request. The filter can provide relevant filter criteria that allow making a selection among these offers, which is likely to have a relatively high density of offers of interest. This facilitates identification of these offers.

For example, the search request that has initially been submitted may provide a response that comprises more than 100 offers. It will be relatively time-consuming to closely examine each of these offers. Moreover, given the relatively vast amount of information that needs to be examined, there is a risk that an offer of interest may not be noticed. The method described hereinbefore provides for a filter that is automatically adapted to an initial response, which may comprise too much information. Moreover, the filter is effective in the sense that among the offers provided in the initial response, a selection can be made in which a relatively high proportion of offers are of interest. The offers of interest can then easily be identified.

### REMARKS

The detailed description hereinbefore with reference to the drawings is merely an illustration of the invention and the additional features, which are defined in the claims. The invention can be implemented in numerous different ways. In order to illustrate this, some alternatives are briefly indicated.

The invention may be applied to advantage in numerous types of products or methods related to database interrogation. An interrogation of a database of offers accessible through a public advertisement website is merely an example. As another example, the invention may be applied to advantage to interrogate a database that comprises messages other than offers, such as numerous posts on a blog. That is, data objects may be of any type, as long as these are susceptible to comprise semantically meaningful elements.

The term "database" should be understood in a broad sense. The term may embrace any collection of data object that can be searched. A database need not necessarily be comprised in a single physical entity capable of storing data, which would imply that each data object is stored in that physical entity. A database may be dispersed over various physical entities, whereby a physical entity may store a portion only of the collection of data objects that form the database. The term database should thus be understood in a functional sense rather than in a physical sense.

In general, there are numerous different ways of implementing the invention, whereby different implementations may have different topologies. In any given topology, a single module may carry out several functions, or several modules may jointly carry out a single function. In this respect, the drawings are very diagrammatic. There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows database interrogation in accordance with the invention. For example, software may be stored in a suitable device readable medium, such as, for example, a magnetic disk, an optical disk, or a memory circuit. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. A method of interrogating a database (107) comprising data objects having semantically meaningful content, the method comprising:
- an analysis step (203) in which a processor (102) analyzes data objects so as to identify semantically meaningful elements of content in a data object, and to identify, for a semantically meaningful element, a type of descriptive information that the semantically meaningful element provides; and
- a filter definition step (206) in which the processor defines a filter (301) for the data objects, the filter comprising a set of filter categories (303-306), whereby a filter category corresponds to a type of descriptive information that has been identified for respective semantically meaningful elements of content occurring in respective data objects, and whereby a filter criterion can be defined for a filter category, so as to form a selection of data objects that have a semantically meaningful element of content providing the type of descriptive information corresponding to the filter category and meeting the filter criterion.

2. A method according to claim 1, comprising a tuple generation step (204) wherein the processor (103) generates a tuple for a semantically meaningful element of content, the tuple comprising:
- a type-defining element, which defines the type of descriptive information that the semantically meaningful element of content provides; and
- a specifying element, which specifies the descriptive information that the semantically meaningful element of content provides,
the tuple being associated with the data object in which the semantically meaningful element of content occurs.

3. A method according to claim 2, wherein the specifying element of the tuple specifies a value in case the type of descriptive information is quantifiable.

4. A method according to claim 2, wherein the type-defining element defines at least one of the following categories of types of descriptive information: size, color, model, style, brand, and age.

5. A method according to claim 2, comprising a tuple processing step (205) in which the processor generates an index of tuples that have been generated and associated with data objects, the tuple processing step following the analysis step (203) and preceding the filter definition step (206).

6. A method according to claim 2, wherein, in the filter (300) that is defined in the filter definition step (206), a filter category (303-306) relates to a type-defining element that occurs in various tuples that have been generated.

7. A method according to claim 6, wherein a filter criterion (307-310) is defined for the filter category (303-306) that relates to the type-defining element of the tuple, whereby the filter criterion specifies an operation depending on the type of descriptive information that the type-defining element defines.

8. A method according to claim 2, wherein, in the filter definition step (206), a filter category (303-306) is defined that corresponds with an aggregate of respective type-defining elements of respective tuples if these respective type-defining elements define a similar type of descriptive information.

9. A method according to claim 1, wherein, in the analysis step (203), the processor detects a data pattern that occurs in several data objects, and that constitutes a semantically meaningful element of content, whereby multiple occurring data patterns constitute a type of descriptive information.

10. A method according to claim 1, wherein the data objects are in the form of respective messages from respective authors.

11. A method according to claim 10, wherein the respective messages constitute respective transaction propositions, a transaction proposition describing an item that is subject of a proposed transaction.

12. A method according to claim 1, comprising:
- a search request step (201) in which the processor (102) receives a search request comprising a search criterion; and
- a search step (202) in which the processor identifies a set of data objects that meet the search criterion,
whereby the analysis step (203) and the filter definition step (206) are applied to the set of data objects that have been identified in the search step.

13. A device readable medium comprising a set of instructions that enables a processor, which is capable of executing the set of instructions, to carry out the method according to claim 1.

14. A processor (101) arranged to interrogate a database comprising data objects having semantically meaningful content, the processor comprising:
- an analysis module arranged to analyze the set of data objects so as to identify semantically meaningful elements of content in a data object, and to identify, for a semantically meaningful element, a type of descriptive information that the semantically meaningful element provides; and
- a filter definition module arranged to define a filter (301) for the set of data objects, the filter comprising a set of filter categories (303-306), whereby a filter category corresponds to a type of descriptive information that has been identified for respective semantically meaningful elements of content occurring in respective data objects, and whereby a filter criterion can be defined for a filter category, so as to form a selection of data objects that have a semantically meaningful element of content providing the type of descriptive information corresponding to the filter category and meeting the filter criterion.
